(19) **Europäisches Patentamt / European Patent Office / Office européen des brevets**

(11) **EP 3 002 815 A1**

(12) # EUROPEAN PATENT APPLICATION

(43) Date of publication:
06.04.2016 Bulletin 2016/14

(51) Int Cl.:
$H01M\ 10/052$ (2010.01)  $H01M\ 4/58$ (2006.01)

(21) Application number: 15192072.5

(22) Date of filing: 17.08.2011

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 20.08.2010 JP 2010185483

(62) Document number(s) of the earlier application(s) in accordance with Art. 76 EPC:
**11177760.3 / 2 421 080**

(71) Applicant: **Kabushiki Kaisha Toshiba**
**Tokyo (JP)**

(72) Inventors:
• **Watanabe, Hidetoshi**
**Tokyo (JP)**
• **Ishii, Haruchika**
**Tokyo (JP)**
• **Inagaki, Hiroki**
**Tokyo (JP)**
• **Shikota, Masataka**
**Tokyo (JP)**

• **Arikawa, Toshihide**
**Tokyo (JP)**
• **Tahara, Hirotada**
**Tokyo (JP)**
• **Newton, Kazuko**
**Tokyo (JP)**
• **Hiruma, Teruo**
**Tokyo (JP)**
• **Asami, Yoshiaki**
**Tokyo (JP)**
• **Kikuma, Yuichi**
**Tokyo (JP)**

(74) Representative: **Hoffmann Eitle**
**Patent- und Rechtsanwälte PartmbB**
**Arabellastraße 30**
**81925 München (DE)**

Remarks:
This application was filed on 29-10-2015 as a divisional application to the application mentioned under INID code 62.

(54) ## NON-AQUEOUS ELECTROLYTE BATTERY

(57) The disclosure describes a non-aqueous electrolyte battery with an improved cycle life. The non-aqueous electrolyte battery includes a positive electrode including a positive electrode layer, a negative electrode including a negative electrode layer, a separator disposed between the positive electrode and the negative electrode, and a non-aqueous electrolyte containing a lithium salt. The negative electrode layer may contain a negative electrode active material which can insert and release lithium ions at 0.4 V or more (V.S. Li/Li$^+$). The lithium salt may contains $LiPF_6$ with a concentration of less than 50% (including 0%). The non-aqueous electrolyte battery may meet the following two formulas: $I \leq Q2/Q1$ (I) and $1 \leq C/A \leq 2$ (II), where Q1 represents a capacitance in a facing portion of the negative electrode, Q2 represents a capacitance in the facing portion of the positive electrode, A represents an area of a surface including the facing portion of the negative electrode of the negative electrode layer, and C represents an area of a surface including the facing portion of the positive electrode of the positive electrode layer.

**FIG. 1**

**Description**

Technical Field

Embodiments of the disclosure relate to a non-aqueous electrolyte battery.

Background

In recent years, environmental awareness has grown, increasing the demand for rechargeable batteries to power electric vehicles such as an electric bicycle, an electric motorcycle, and a forklift. A battery mounted in such an electric vehicle is required to have high safety standards, a long life, and a fast charge performance. Lithium ion rechargeable batteries have attracted attention due to their high energy density. In particular, a battery with a high-potential active material, such as a lithium-titanium composite oxide, used in a negative electrode is generally more desirable in terms of safety and fast charge performance than a battery with a carbon negative electrode. However, the cycle life of the battery with a lithium-titanium composite oxide is short, and it is desirable to further lengthen the life of the battery.

Summary

An object of the disclosure is to provide a non-aqueous electrolyte battery with an improved cycle life. According to embodiments of the present disclosure, the non-aqueous electrolyte battery may include a positive electrode including a positive electrode layer, a negative electrode including a negative electrode layer, a separator disposed between the positive electrode and the negative electrode, and a non-aqueous electrolyte containing a lithium salt. The negative electrode layer may contain a negative electrode active material which can insert and release lithium ions at 0.4 V or more (V.S. Li/Li$^+$). The lithium salt may contains LiPF$_6$ with a concentration of less than 50% (including 0%). The non-aqueous electrolyte battery may meet the following two formulas: $1 \leq Q2/Q1$ (I) and $1 \leq C/A \leq 2$ (II), where Q1 represents a capacitance in a facing portion of the negative electrode, Q2 represents a capacitance in the facing portion of the positive electrode, A represents an area of a surface including the facing portion of the negative electrode of the negative electrode layer, and C represents an area of a surface including the facing portion of the positive electrode of the positive electrode layer.

In certain embodiments, the non-aqueous electrolyte battery may contain the lithium salt LiBF$_4$. The non-aqueous electrolyte battery may also contain the lithium salt LiPF$_6$ with a concentration of 33.3% or less. In some embodiments, the concentration may be 20% or less. The lithium salt may be contained in the non-aqueous electrolyte in a concentration of 0.5 mol/L or more and 2 mol/L or less. The negative electrode material may contain lithium titanate having a spinel structure. The separator may include fine particles of metal oxide.

Certain embodiments may include a method of manufacturing a non-aqueous electrolyte battery, including providing a positive electrode including a positive electrode layer, proving a negative electrode including a negative electrode layer, providing a separator disposed between the positive electrode and the negative electrode, and providing a non-aqueous electrolyte containing a lithium salt. The negative electrode layer may contain a negative electrode active material which can insert and release lithium ions at 0.4 V or more (V.S. Li/Li$^+$). The lithium salt may contains LiPF$_6$ with a concentration of less than 50% (including 0%). The non-aqueous electrolyte battery may meet the following two formulas: $1 \leq Q2/Q1$ (I) and $1 \leq C/A \leq 2$ (II), where Q1 represents a capacitance in a facing portion of the negative electrode, Q2 represents a capacitance in the facing portion of the positive electrode, A represents an area of a surface including the facing portion of the negative electrode of the negative electrode layer, and C represents an area of a surface including the facing portion of the positive electrode of the positive electrode layer.

Certain embodiments of the present disclosure any also include a method of powering electrical equipment. The method may include electrically connecting a non-aqueous electrolyte battery to electrical equipment, the non-aqueous electrolyte battery including a positive electrode including a positive electrode layer, a negative electrode including a negative electrode layer, a separator disposed between the positive electrode and the negative electrode, and a on-aqueous electrolyte containing a lithium salt. The negative electrode layer may contain a negative electrode active material which can insert and release lithium ions at 0.4 V or more (V.S. Li/Li$^+$). The lithium salt may contains LiPF$_6$ with a concentration of less than 50% (including 0%). The non-aqueous electrolyte battery may meet the following two formulas: $1 \leq Q2/Q1$ (I) and $1 \leq C/A \leq 2$ (II), where Q1 represents a capacitance in a facing portion of the negative electrode, Q2 represents a capacitance in the facing portion of the positive electrode, A represents an area of a surface including the facing portion of the negative electrode of the negative electrode layer, and C represents an area of a surface including the facing portion of the positive electrode of the positive electrode layer.

Brief Description of the Drawings

FIG. 1 is a cross-sectional schematic view of an example flat-type non-aqueous electrolyte battery;
FIG. 2 is an enlarged cross-sectional view of an A portion of FIG. 1;
FIG. 3 is a plan view of an extracted portion of an example electrode;
FIG. 4 is a perspective view of the extracted portion of an example electrode;
FIG. 5 is an enlarged schematic view of a winding end portion of an example wound electrode group;
FIG. 6 is an enlarged schematic view of a winding start portion of an example wound electrode group;
FIG. 7 is a cross-sectional view of an example cylindrical wound electrode group;
FIG. 8 is a development view of an example cylindrical wound electrode group;
FIG. 9 is a plan view of an example cylindrical wound electrode group;
FIG. 10 is a cross-sectional view of an example flat wound electrode group;
FIG. 11 is a development view of an example coin-type electrode group;
FIG. 12 is an exploded cross-sectional view of an example coin-type electrode group;
FIG. 13 is a plan view of an example coin-type electrode group;
FIG. 14 is an exploded cross-sectional view of an example stacked electrode group;
FIG. 15 is a development view of an example stacked electrode group;
FIG. 16 is a plan view of an example stacked electrode group; and
FIG. 17 is a perspective view showing an appearance of an example angular non-aqueous electrolyte battery.

Detailed Description

According to embodiments of the present disclosure, there is provided a non-aqueous electrolyte battery which may include a positive electrode, a negative electrode, a separator disposed between the positive electrode and the negative electrode, and a non-aqueous electrolyte containing a lithium salt and satisfying formulae (I) and (II), shown below. The positive electrode may include a positive electrode layer formed on at least one surface of a positive electrode collector. The negative electrode may include a negative electrode layer formed on at least one surface of a negative electrode collector. The negative electrode layer may contain a negative electrode active material, which can insert and release lithium ions at 0.4 V or more (V.S. Li/Li$^+$). The lithium salt may contain LiPF$_6$ with a concentration of less than 50% (including 0%).

$$1 \leq Q2/Q1 \quad (I)$$

$$1 \leq C/A \leq 2 \quad (II)$$

Here, a portion of the negative electrode layer facing the positive electrode through the separator is a facing portion of the negative electrode, and a portion of the positive electrode layer facing the negative electrode through the separator is a facing portion of the positive electrode. In the formulate (I) and (II), Q1 represents a capacitance in the facing portion of the negative electrode, Q2 represents a capacitance in the facing portion of the positive electrode, A represents an area of a surface including the facing portion of the negative electrode of the negative electrode layer, and C represents an area of a surface including the facing portion of the positive electrode of the positive electrode layer.

When a high-potential active material such as a lithium-titanium composite oxide is used in a negative electrode, and when a positive electrode is larger than the negative electrode, and the positive electrode has a portion not facing the negative electrode, the positive electrode is eluted. Even if the positive electrode area and the negative electrode area are the same size, a portion of the positive electrode close to the negative electrode edge is eluted. The elution of the positive electrode is caused by an influence of hydrofluoric acid, which is generated by the decomposition of LiPF$_6$, used as a supporting salt of a non-aqueous electrolyte, at the negative electrode edge. When the positive electrode is eluted, the eluted metal is deposited on the negative electrode, and the capacity in cycles deteriorates. In addition, the separator may be damaged and cause a short circuit.

However, according to embodiments of the present disclosure, the elution of the positive electrode may be suppressed and thereby suppress the capacity deterioration in cycles, improving the cycle life of the battery.

Hereinafter, embodiments of the present disclosure will be described with reference to the drawings, and overlapping descriptions will not be repeated. Each drawing is a schematic view for describing an embodiment of the present disclosure and promoting the understanding thereof. In each drawing, although there are parts differing in shape, dimension, ratio, and so on from those of an actual apparatus, these parts may be suitably changed in design taking the following descriptions and well-known techniques into account.

The non-aqueous electrolyte battery according to certain embodiments of the present disclosure may include a positive electrode including a positive electrode layer formed on at least one surface of a positive electrode collector, a negative electrode including a negative electrode layer formed on at least one surface of a negative electrode collector, a separator disposed between the positive electrode and the negative electrode, and a non-aqueous electrolyte containing a lithium salt. The negative electrode layer may contain a negative electrode active material, which can insert and release lithium ions at 0.4 V or more (V.S. Li/Li$^+$). The lithium salt may contain LiPF$_6$, which has a concentration of less than 50% (including 0%) when the concentration of the lithium salt contained in the non-aqueous electrolyte is 100%.

The non-aqueous electrolyte battery of the embodiment may satisfy the following formulae:

$$1 \leq Q2/Q1 \quad (I)$$

$$1 \leq C/A \leq 2 \quad (II).$$

A portion of the negative electrode layer facing the positive electrode through the separator is a facing portion of the negative electrode, and a portion of the positive electrode layer facing the negative electrode through the separator is a facing portion of the positive electrode. In the formulate (I) and (II), Q1 represents a capacitance in the facing portion of the negative electrode, Q2 represents a capacitance in the facing portion of the positive electrode, A represents an area of a surface including the facing portion of the negative electrode of the negative electrode layer, and C represents an area of a surface including the facing portion of the positive electrode of the positive electrode layer.

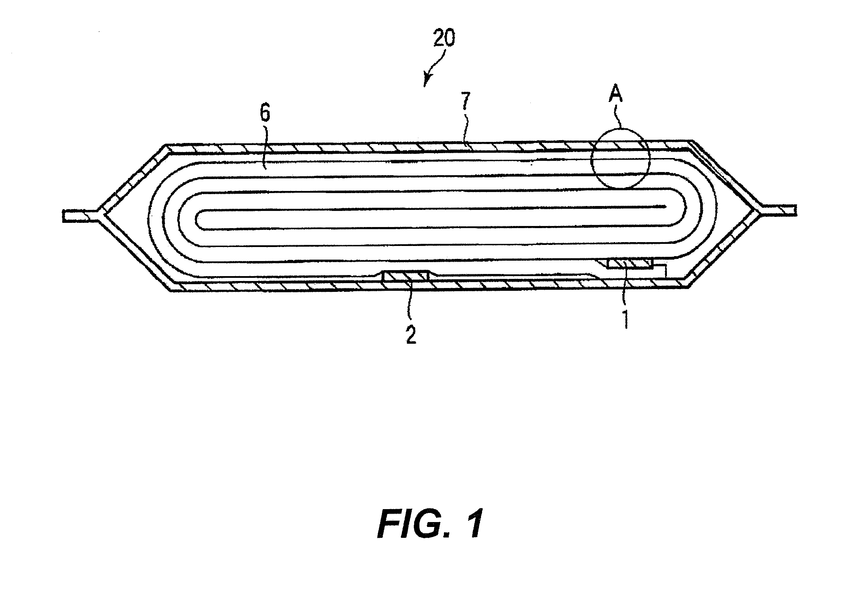

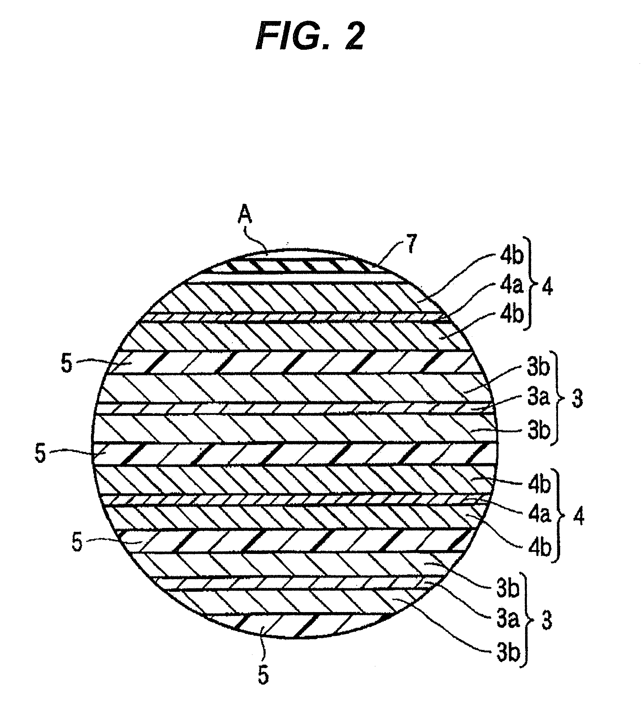

FIG. 1 is a cross-sectional schematic view of an example embodiment of a non-aqueous electrolyte rechargeable battery, a flat-type non-aqueous electrolyte rechargeable battery 20. FIG. 2 is an enlarged cross-sectional view of an A portion of FIG. 1. A wound electrode group 6 includes a positive electrode 3, a negative electrode 4, and a separator 5 disposed between the positive electrode 3 and the negative electrode 4. The separator 5 is disposed between the positive electrode 3 and the negative electrode 4, whereby the negative electrode 4 and the positive electrode 3 are spatially separated from each other.

As shown in FIG. 1, the wound electrode group 6 is housed in an armoring material 7 filled with a non-aqueous electrolyte (not shown). Near the outer peripheral end of the wound electrode group 6, a negative electrode terminal 2 is electrically connected to the negative electrode 4, and a positive electrode terminal 1 is electrically connected to the positive electrode 3.

The constitution of the wound electrode group 6 will be further described in detail. As shown in FIG. 2, the positive electrodes 3 and the negative electrodes 4 are configured in layers separated by the separator 5. The negative electrode 4 is configured in layers so that a negative electrode layer 4b, a negative electrode collector 4a, and the negative electrode layer 4b are stacked in this order from the outer layer. The positive electrode 3 is configured in layers so that a positive electrode layer 3b, a positive electrode collector 3a, and the positive electrode layer 3b are stacked in this order.

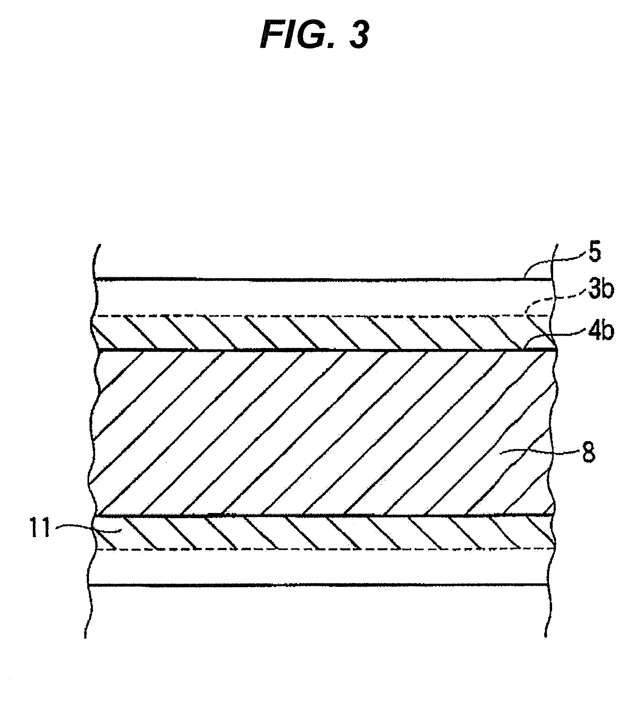

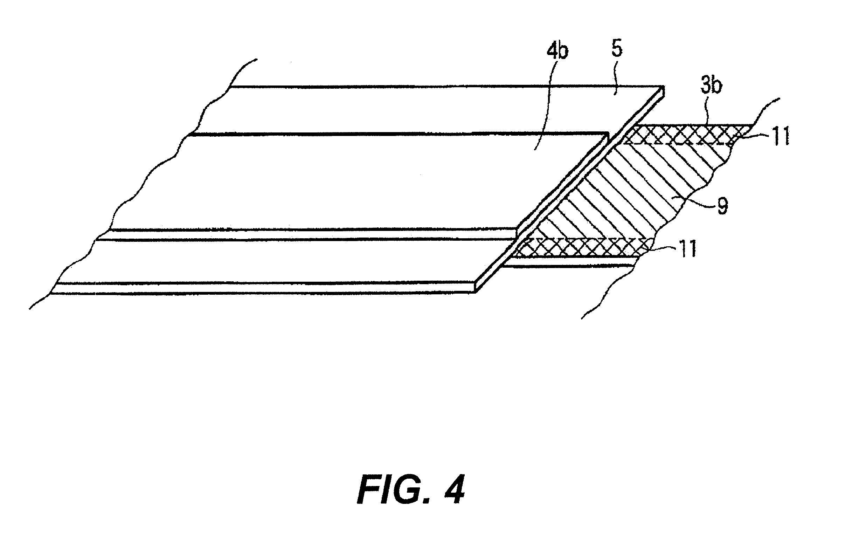

The positive electrode layer 3b and the negative electrode layer 4b are in contact with the separator 5. For convenience, FIGS. 3 and 4 schematically show those three layers. In FIGS. 3 and 4, the positive electrode layer 3b and the negative electrode layer 4b face each other through the separator 5. FIG. 3 is a planar view as viewed from the side of the negative electrode layer 4b and is an overhead view of FIG. 4. FIG. 4 is a perspective view of the partially cut-away negative electrode 4b and separator 5.

As illustrated, the entire surface of the negative electrode layer 4b faces the positive electrode layer 3b through the separator 5. Meanwhile, although the positive electrode layer 3b partially faces the negative electrode layer 4b through the separator 5, the positive electrode layer 3b has a portion not facing the negative electrode layer 4b.

In the embodiments shown, a portion facing another electrode through a separator is referred to as a facing portion, and a portion not facing the electrode is referred to as a non-facing portion. Specifically, a portion of a negative electrode layer facing the positive electrode layer 3b through the separator (a portion where orthogonal projections overlap) is a facing portion 8 of the negative electrode, and a portion of a positive electrode layer facing the negative electrode layer 4b through the separator (a portion where orthogonal projections overlap) is a facing portion 9 of the positive electrode. A portion of the positive electrode layer not facing the negative electrode layer 4b (a portion where orthogonal projections do not overlap) is a non-facing portion 11 of the positive electrode. In the example of FIGS. 3 and 4, since the entire surface of the negative electrode layer 4b faces the positive electrode layer 3b through the separator, there is no non-facing portion of the negative electrode.

In certain embodiments, such as the example embodiment shown in FIG. 3, an area (A) of a surface including the facing portion of the negative electrode of the negative electrode layer is the area of the facing portion 8. Meanwhile, in the example embodiment shown in FIG. 4, an area (C) of a surface including the facing portion of the positive electrode of the positive electrode layer is an area including the area of the facing portion 9 and the area of the non-facing portion 11. Namely, in the embodiment, when there is no non-facing portion, a surface including the facing portion denotes a surface constituted of the facing portion, and when there is the non-facing portion, the surface including the facing portion denotes a surface constituted of the facing portion and the non-facing portion. This means that in the case of a wound electrode group with negative and positive electrode layers, the areas of the layers located in the outermost layer and the innermost layer are not included. The areas of the outermost layer and the innermost layer are excluded because active materials contained in these layers do not contribute to insertion and release of lithium ions.

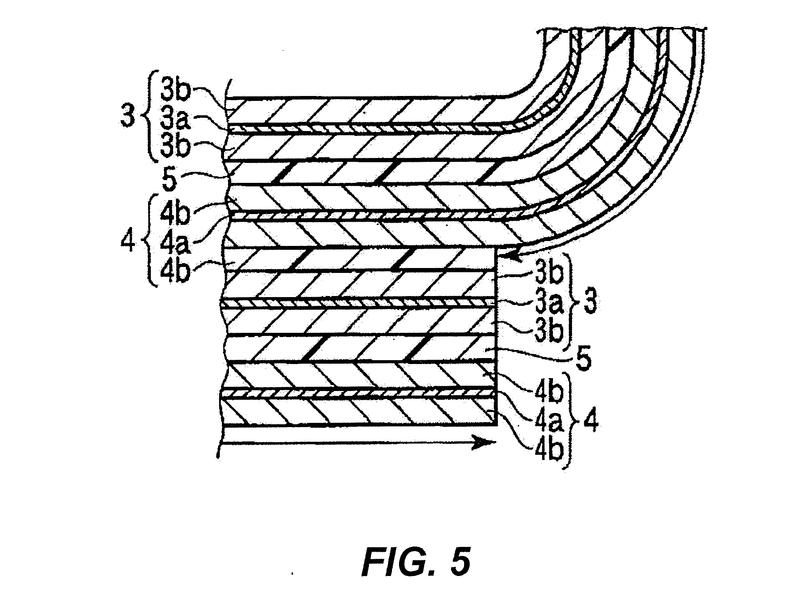

When the outermost layer is the negative electrode layer 4b, as shown in FIG. 5, the outermost layer is a portion from the position of the negative electrode layer 4b corresponding to the end of the winding end portion of the positive electrode layer 3b to the end of the winding end portion of the negative electrode layer 4b. In FIG. 5, the outermost layer is a portion within a range shown by an arrow in the outermost negative electrode layer 4b, and does not include the facing portion of one electrode layer because it does not face the other electrode layer through a separator. The outermost layer may be referred to as a "non-facing surface". When the separator 5 is provided on the outermost side, the electrode layer in contact with the separator 5 is the outermost layer in the embodiment.

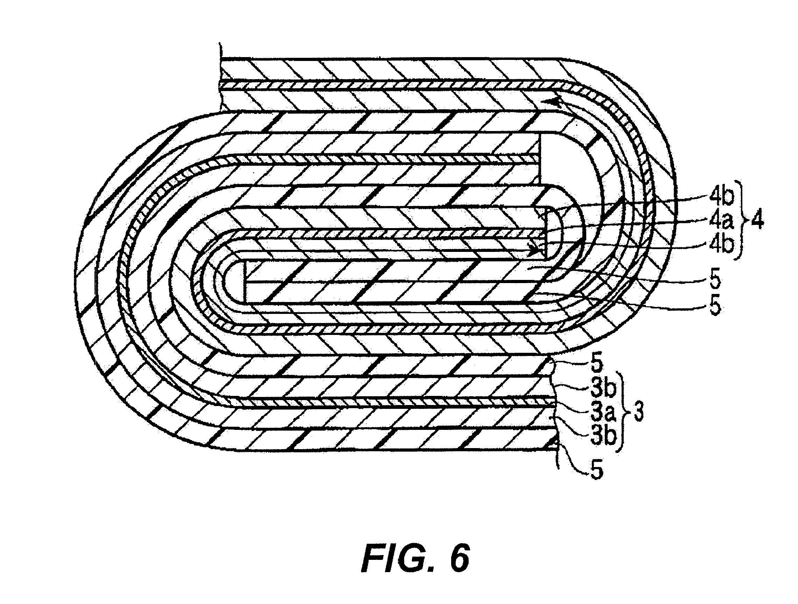

When the innermost layer is the negative electrode layer 4b, as exemplified in FIG. 6, the innermost layer is a portion from the winding start end of the negative electrode layer 4b to the winding start end of the positive electrode. In FIG. 6, the innermost layer is a portion within a range shown by an arrow in the innermost negative electrode layer 4b, and does not include the facing portion of one electrode layer because it does not face the other electrode layer through a separator. The innermost layer may be referred to as a "non-facing surface".

Although the outermost layer and the innermost layer may be the positive electrode layers 3b or the negative electrode layers 4b, it is preferable that an outer electrode is longer than an inner electrode. For example, when the outermost layer is the negative electrode layer 4b, it is preferable that the positive electrode layer 3b is not the non-facing surface (a surface not including the facing portion of the positive electrode).

According to certain embodiments, by virtue of the use of the negative electrode active material, which can insert and release lithium ions at 0.4 V or more (V.S. Li/Li$^+$), a non-aqueous electrolyte rechargeable battery having a high energy density and excellent cycle life, safety, and fast charge performance can be provided. When the potential is 0 V, lithium metal is eluted, and cycling characteristics may be deteriorated by dendrite formation. Meanwhile, since it is preferable that the potential difference between positive and negative electrodes is large, it is preferable that the potential at which lithium ions can be inserted and released is lowered. Accordingly, a negative electrode is used whose potential at which lithium ions can be inserted and released is 0.4 V or more (V.S. Li/Li$^+$). When the potential at which lithium ions can be inserted and released is less than 0.4 V (V.S. Li/Li$^+$), the difference between the upper and lower limits of the potential of the negative electrode at which lithium ions can be inserted and released and a deposition potential of lithium metal are too small, and thus, under the influence of, for example, impedance change due to temperature, change in circuit voltage, and change in overvoltage due to change in current value, the positive electrode may not be protected from overcharge by a potential change of the negative electrode. In order to secure the energy density, it is preferable that the potential of the negative electrode, at which lithium ions can be inserted and released, is 2.5 V or less (V.S. Li/Li$^+$).

According to certain embodiments, the ratio (Q2/Q1) between a capacitance (Q2) in the facing portion of the positive electrode and a capacitance (Q1) in the facing portion of the negative electrode may be 1 in an active material similar to the active material described above, allowing for charge to be controlled by the potential change of the negative electrode. Thus, the positive electrode can be protected from overcharge, and deterioration of the positive electrode can be suppressed. Meanwhile, when Q2/Q1 is less than 1, the positive electrode is deteriorated, and a capacity maintenance ratio in cycles is reduced. It is preferable that Q2/Q1 is 1.5 or less in order to avoid deterioration of the negative electrode.

The ratio (C/A) between the area (C) of the surface including the facing portion of the positive electrode of the positive electrode layer and the area (A) of the surface including the facing portion of the negative electrode of the negative electrode layer may be between 1 and 2 inclusive, and, at the same time, LiPF$_6$ in a lithium salt contained in a non-aqueous electrolyte may have a concentration of less than 50%, which suppresses the elution of the positive electrode.

The electrical conductivity of an electrolyte in the non-aqueous electrolyte is lower than the electrical conductivity of an aqueous solution. Thus, in general, in constant current charging and discharging, only a portion facing another pole of each electrode contributes to charging and discharging. On the other hand, in constant voltage charging and discharging, a portion not facing another pole of each electrode contributes to battery reaction.

A lithium-ion battery is normally charged by constant-voltage charging after constant-current charging (CC-CV charging) and discharged by constant current discharging (CC discharging). During the constant current charging, lithium ions are released from the positive electrode and inserted mainly at a portion of the negative electrode where opposite poles face each other. On the other hand, during the constant voltage charging, lithium ions released from the positive electrode are inserted in the negative electrode portion not facing the positive electrode. However, since discharge is performed by constant current discharging, only the lithium ions inserted in the negative electrode portion facing the positive electrode are emitted, and the lithium ions inserted in the portion not facing the positive electrode are not emitted. Accordingly, if C/A is less than 1, when charge and discharge are repeated, the lithium ions not related to charging and discharging may accumulate at the negative electrode, and the positive electrode may overcharge. As a result, the capacity in cycles is significantly reduced. However, if C/A is 1 or more, according to certain embodiments, the lithium ions not related to charging and discharging may not accumulate at the negative electrode, and the positive electrode may be protected from overcharge. Meanwhile, if C/A is more than 2, the non-facing surface of the positive electrode is too large, reducing the energy density. Therefore, C/A is preferably between 1 and 1.5 inclusive, or between 1 or more and 1.3 inclusive, to both protect against overcharging the positive electrode and maximize the energy density of the battery.

When C/A is 1 or more, $LiPF_6$ contained in the non-aqueous electrolyte may decompose at the negative electrode edge portion and form hydrofluoric acid. The hydrofluoric acid elutes the positive electrode, thereby deteriorating the capacity in cycles. Especially, the non-facing portion of the positive electrode is easily eluted by hydrofluoric acid. The non-facing portion of the positive electrode is more susceptible to elution because it is in an imbalanced state. The imbalanced state occurs because at certain times, the non-facing portion of the positive electrode is not yet charged because the lithium ions are not inserted and released, and yet the facing portion, electrically parallel with the non-facing portion, is in a charged state, creating the possibility for charge in the non-facing portion.

Metal lithium may be pressed during production and fitted to a negative electrode. When lithium ions are electrochemically occluded in the negative electrode, even if a spinel-type lithium titanium oxide is used for the negative electrode, and $LiPF_6$ is used alone for an electrolytic solution, the elution of the positive electrode may not be observed. Pressing and fitting the lithium metal may create a uniform potential across the negative electrode, stabilizing the potential and preventing the generation of hydrofluoric acid. In other words, in a battery using the spinel-type lithium titanium oxide for the negative electrode and using $LiPF_6$ alone for the electrolytic solution, and if metal lithium is not pressed and fitted, the positive electrode is eluted in such a case that the area of the positive electrode and the area of the negative electrode are equal, or the positive electrode has a portion not facing the negative electrode because the positive electrode is larger than the negative electrode.

However, according to certain embodiments of the present disclosure, if the concentration of $LiPF_6$ in a non-aqueous electrolyte is less than 50% of a supporting salt (e.g. a lithium salt), the generation of hydrofluoric acid is suppressed, thereby suppressing the elution of the positive electrode. When the concentration of $LiPF_6$ is 50% or more, hydrofluoric acid production is increased to cause the elution of the position electrode. The concentration of $LiPF_6$ is preferably 33.3 % or less, or in certain embodiments 20% or less. The generation of hydrofluoric acid is related to a high potential negative electrode whose potential at which lithium ions are inserted and released is 0.4 V or more (V.S. $Li/Li^+$). When a low potential negative electrode such as carbon is used, hydrofluoric acid is reduced, and therefore, the positive electrode is not eluted.

In certain embodiments, the non-aqueous electrolyte may contain $LiBF_4$ as a lithium salt. By virtue of the fact that the non-aqueous electrolyte contains $LiPF_6$, the generation of hydrofluoric acid can be further suppressed. Although cell swelling and self-discharge capacity are slightly increased, $LiBF_4$ can be used as a lithium salt. When the non-aqueous electrolyte contains $LiPF_6$, the cell swelling and the self-discharge capacity can be suppressed. The $LiPF_6$ reacts with water existing in a battery to thereby obtain the effect of stabilizing a film on a surface of an electrode, so that a side reaction is suppressed.

In certain embodiments, the lithium salt may be contained in the non-aqueous electrolyte in a concentration of 0.5 mol/L or more and 2 mol/L or less. By virtue of the fact that the non-aqueous electrolyte contains the lithium salt with a concentration of 0.5 mol/L or more, a sufficient amount of Li ions can be supplied to an active material surface. On the other hand, when the concentration of the lithium salt is 2 mol/L or less, the viscosity of the electrolyte solution can fall within an appropriate range. The concentration of the lithium salt is preferably 1 mol/L or more and 2 mol/L or less, but such a concentration is not required within the scope of this disclosure.

According to certain of the above embodiments, negative electrode active material which may insert and release lithium ions at 0.4 V or more (V.S. $Li/Li^+$), a non-aqueous solution that includes lithium salt containing $LiPF_6$ with a concentration of less than 50% (including 0%), and positive and negative electrodes satisfying the formulae (I) and (II) may be used. According to such an embodiment, the positive electrode may protected from overcharge, the elution of the positive electrode may suppressed, and the capacity deterioration in cycles of the positive electrode may be suppressed, thereby improving the cycle life of the non-aqueous electrolyte battery.

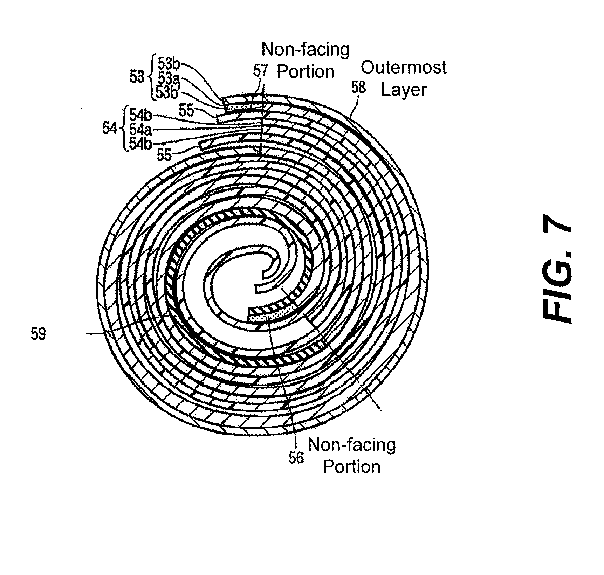

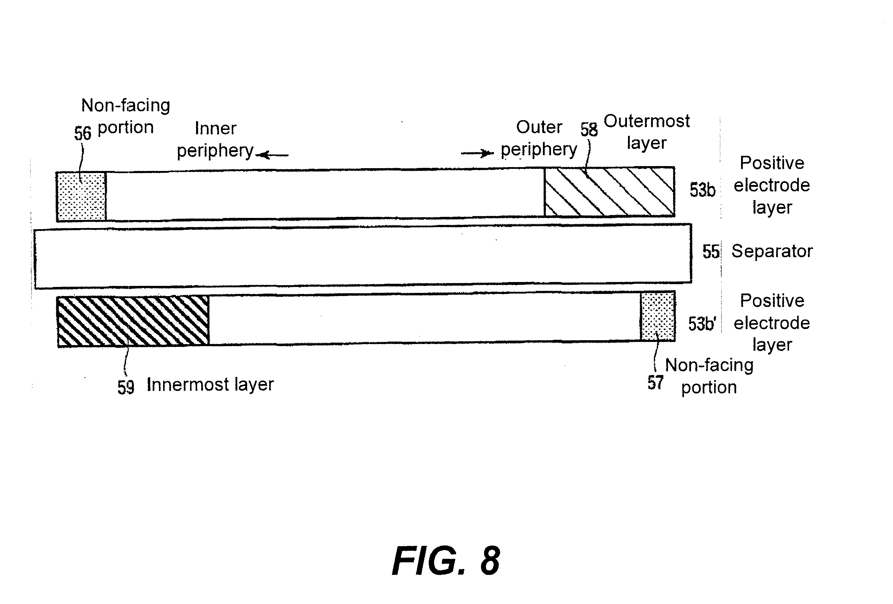

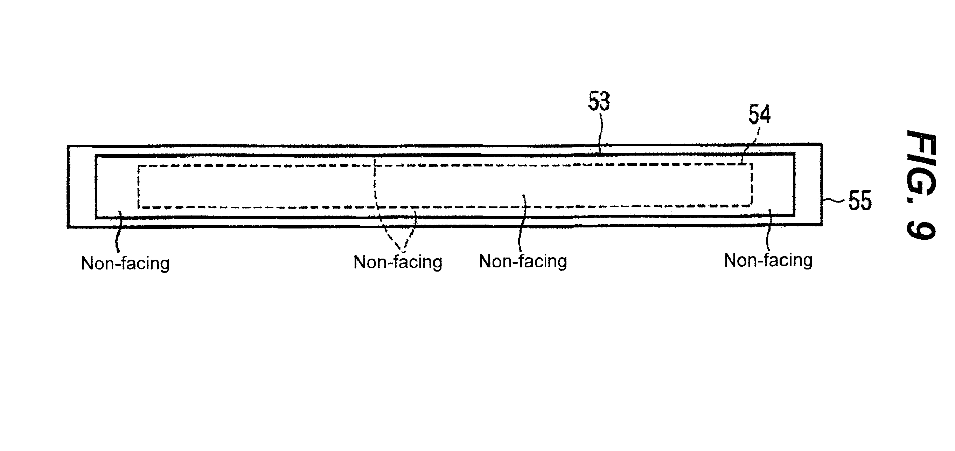

Hereinafter, taking as an example an electrode group having various shapes, the facing portion, the non-facing portion, and the outermost and innermost layers will be specifically described. FIG. 7 is a cross-sectional schematic view of a cylindrical wound electrode group. FIG. 8 is a development view of the cylindrical wound electrode group. FIG. 9 is a plan view of a spread cylindrical wound electrode group as viewed from the positive electrode side. The electrode group shown in FIG. 7 includes a positive electrode 53, a negative electrode 54, and a separator 55, disposed between the positive electrode 53 and the negative electrode 54, and wound in a cylindrical shape. The separator 55 may be disposed between the positive electrode 53 and the negative electrode 54, whereby the negative electrode 4 and the positive electrode 3 are spatially separated from each other. The positive electrode 53 and the negative electrode 54 may be configured in layers through the separator 55. The negative electrode 54 may be configured in layers so that a negative electrode layer 54b, a negative electrode collector 54a, and the negative electrode layer 54b are stacked in this order from the outer layer. The positive electrode 53 may be configured in layers so that a positive electrode layer 53b, a positive electrode collector 53a, and the positive electrode layer 53b are stacked in this order. In the electrode group, the positive electrode layers 53b may be located at the outermost and innermost peripheries.

As shown in FIGS. 7 and 8, the outer positive electrode layer 53b has a non-facing portion 56 at the winding start portion, a facing portion facing the negative electrode 54 through the separator, and an outermost layer 58 at the winding end portion. Meanwhile, the inner positive electrode layer 53b' has an innermost layer 59 at the winding start portion, a facing portion facing the negative electrode 54 through the separator, and a non-facing portion 57 at the winding end portion. As shown in the plan view of FIG. 9, the outermost and innermost layers are the non-facing surfaces located at both the left and right ends. The same holds for the case in which the negative electrode layers are located at the outermost and innermost peripheries.

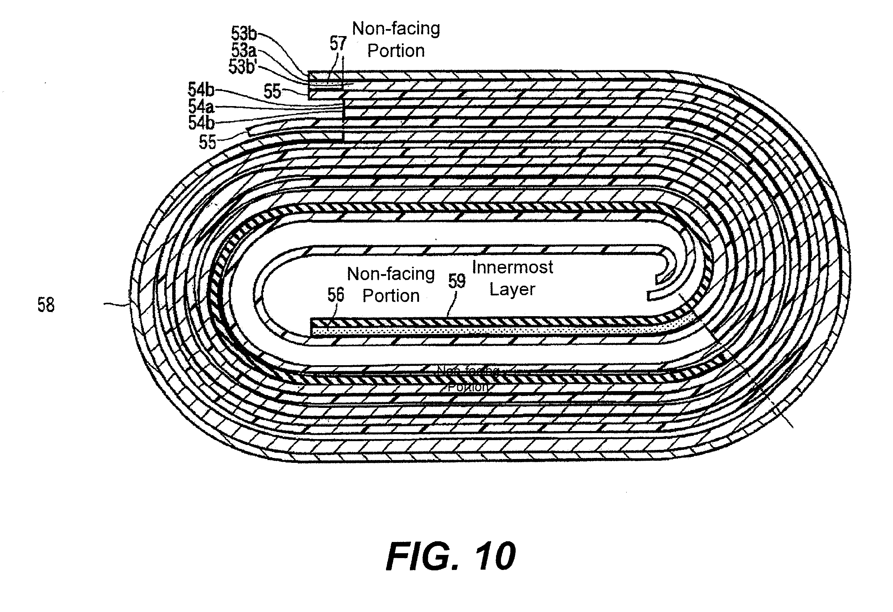

FIG. 10 is a cross-sectional view of a flat wound electrode group. As with the cylindrical wound electrode group of FIG. 7, the flat wound electrode group of FIG. 10 includes a positive electrode 53, a negative electrode 54, and a separator 55, disposed between the positive electrode 53 and the negative electrode 54, and wound in a flat shape. The separator 55 may be disposed between the positive electrode 53 and the negative electrode 54, whereby the negative electrode 54 and the positive electrode 53 are spatially separated from each other. The positive electrode 53 and the negative electrode 54 are configured in layers through the separator 55. The negative electrode 54 may be configured in layers so that a negative electrode layer 54b, a negative electrode collector 54a, and the negative electrode layer 54b are stacked in this order from the outer layer. The positive electrode 53 may be configured in layers so that a positive electrode layer 53b, a positive electrode collector 53a, and the positive electrode layer 53b' are stacked in this order. In the electrode group, the positive electrode layers 53b and 53b' are located at the outermost and innermost peripheries.

As shown in FIG. 10, the outer positive electrode layer 53b has a non-facing portion 56 at the winding start portion, a facing portion facing the negative electrode 54 through the separator, and an outermost layer 58 at the winding end portion. Meanwhile, the inner positive electrode layer 53b' has an innermost layer 59 at the winding start portion, a facing portion facing the negative electrode 54 through the separator, and a non-facing portion 57 at the winding end portion. As with the cylindrical wound electrode group, the flat wound electrode group has the facing portion, the non-facing portion, and the outermost and innermost layers. The same holds for the case in which the negative electrode layers are located at the outermost and innermost peripheries.

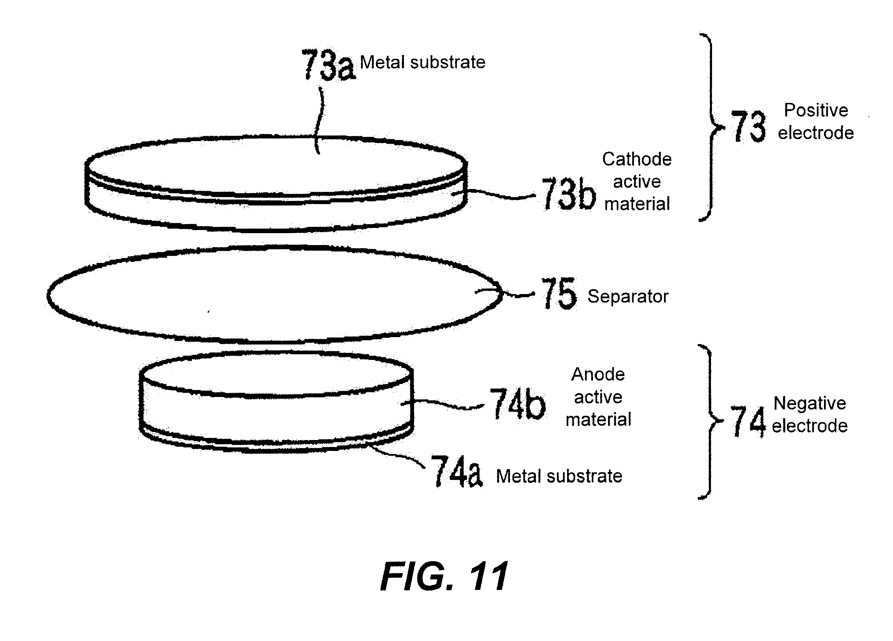

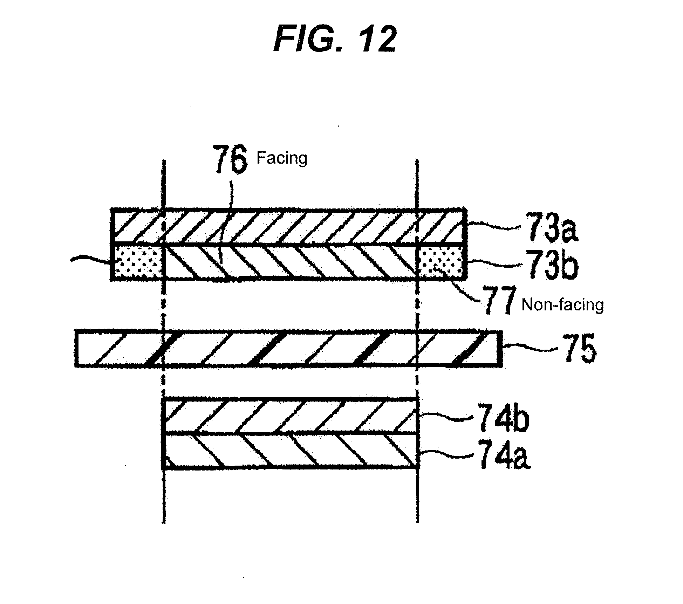

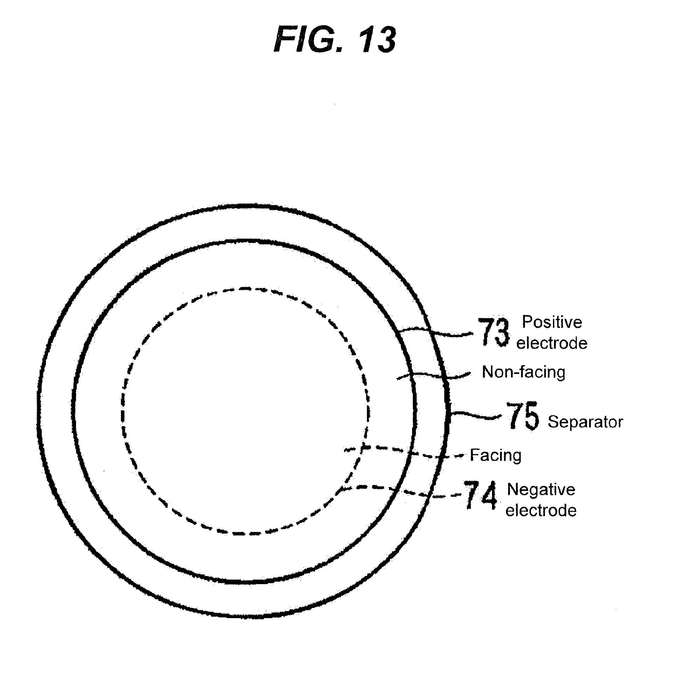

FIG. 11 is a development view of a coin-type electrode group. FIG. 12 is an exploded cross-sectional view of components of the coin-type electrode group. FIG. 13 is a plan view of the coin-type electrode group as viewed from the positive electrode side. The electrode group shown in FIG. 11 has a laminate structure including a negative electrode 74, a separator 75, and a positive electrode 73. The separator 75 is disposed between the positive electrode 73 and the negative electrode 74, whereby the negative electrode 74 and the positive electrode 73 are spatially separated from each other. In the negative electrode 74, a negative electrode layer 74b is formed in a layer on a metal substrate 74a, and the negative electrode layer 74b is in contact with the separator 75. In the positive electrode 73, a positive electrode layer 73b is formed in a layer on a metal substrate 73a, and the positive electrode layer 73b is in contact with the separator 75.

As seen in FIGS. 12 and 13, a portion where the positive electrode layer 73b and the negative electrode layer 74b overlap each other through the separator 75 is a facing portion 76 of the positive electrode 73. A portion which is an outer peripheral portion of the facing portion 76 of the positive electrode 73 and a portion where the positive electrode layer 73b and the negative electrode layer 74b do not overlap are non-facing portions 77 of the positive electrode 73. The negative electrode 74 has no non-facing portion. In such a coin-type electrode group, there is no non-facing surface.

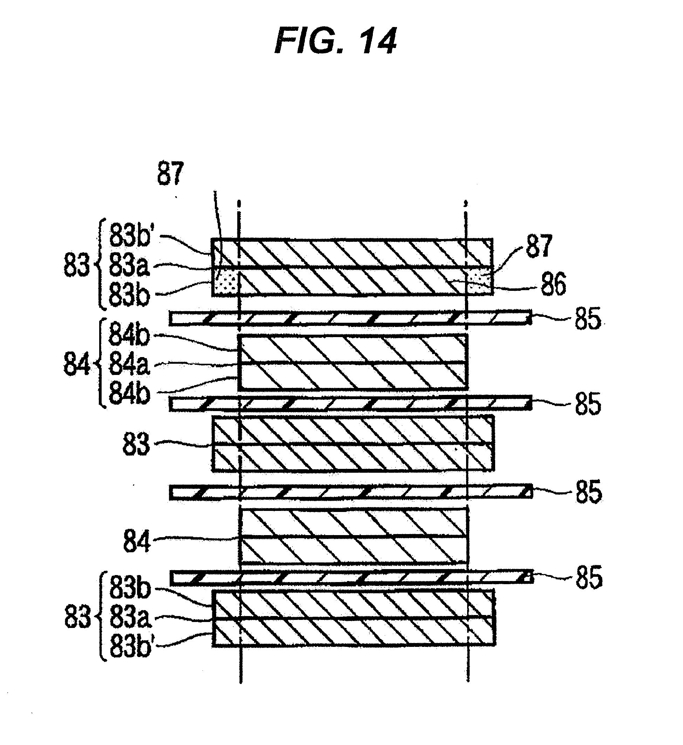

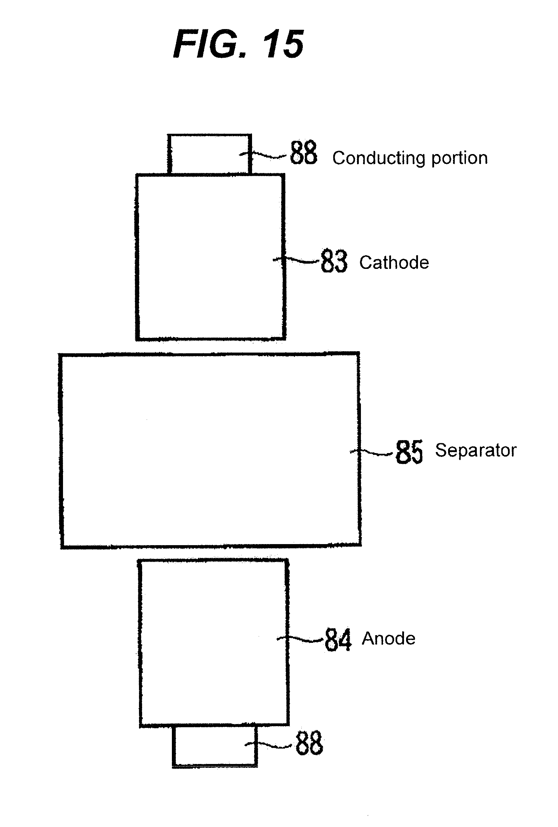

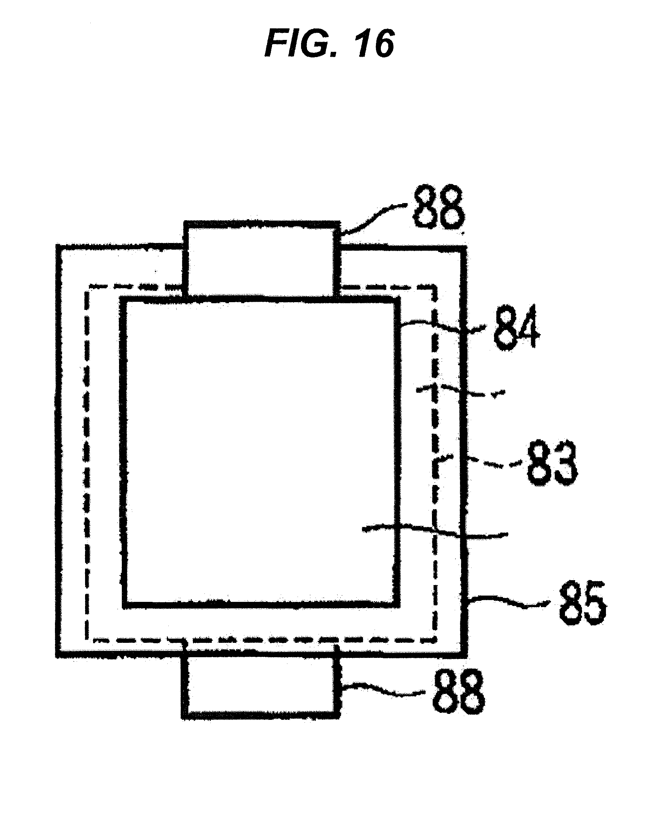

FIG. 14 is an exploded cross-sectional view of components of a stacked electrode group. FIG. 15 is a development view of a portion of the electrode group. FIG. 16 is a plan view of the electrode group as viewed from the side of a negative electrode 84 when the negative electrode 84, a separator 85, and a positive electrode 83 are stacked in sequence from top. In the electrode group shown in FIG. 14, the positive electrode 83 and the negative electrode 84 are alternately stacked through the separator 85. The separator 85 is disposed between the positive electrode 83 and the negative electrode 84, whereby the negative electrode 84 and the positive electrode 83 are spatially separated from each other. The positive electrode 83 is configured in layers so that a positive electrode layer 83b, a positive electrode collector 83a, and the positive electrode layer 83b are stacked in this order from the outer layer.

The negative electrode 84 is configured in layers so that a negative electrode layer 84b, a negative electrode collector 84a, and the negative electrode layer 84b are stacked in this order.

As seen in FIGS. 14 and 16, in the positive electrode layer 83b, a portion facing the negative electrode 84 through the separator 85 is a facing portion 86 of the positive electrode 83. A portion which is an outer peripheral portion of the facing portion 86 of the positive electrode 83 and a portion not facing the negative electrode 84 are non-facing portions 87 of the positive electrode 83. In the electrode group in FIG. 14, the uppermost positive electrode layer 83b' and the lowermost positive electrode layer 83b' are the non-facing surfaces. In the electrode group shown in FIG. 14, the negative electrode 84 has no non-facing portion and non-facing surface.

According to the above described embodiments, the positive electrode is protected from overcharge, and the capacity deterioration in cycles of the positive electrode is suppressed, whereby the non-aqueous electrolyte battery with an improved cycle life can be provided.

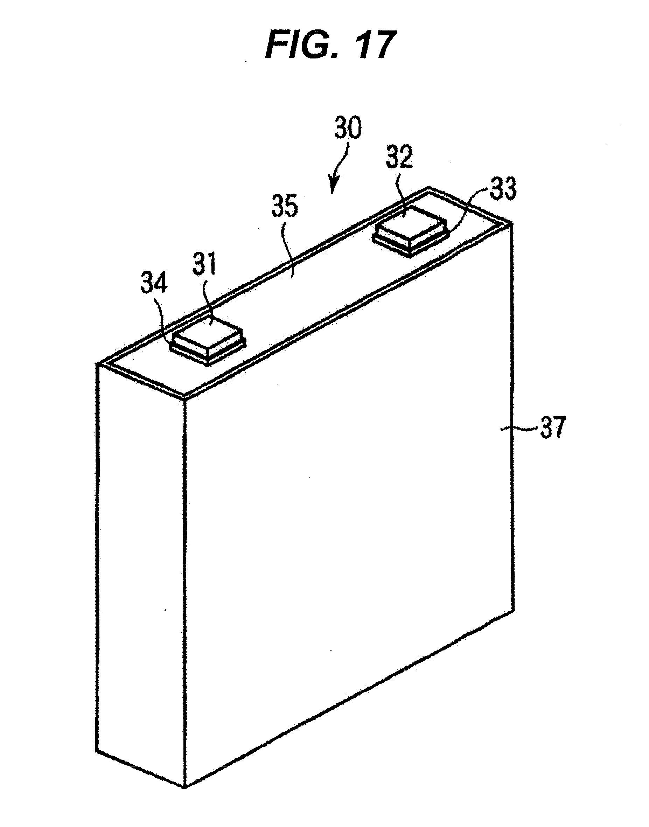

Although the flat type non-aqueous electrolyte battery is shown in FIG. 1, the disclosure is not limited thereto, and non-aqueous electrolyte batteries having other shapes may be used. As an example thereof, FIG. 17 shows a sealed type angular non-aqueous electrolyte battery 30. The angular non-aqueous electrolyte battery 30 has an outer can 37, a flat type electrode group (not shown) housed in the outer can 37, a lid 35 attached to the opening of the outer can 37, and positive and negative electrode terminals 31 and 32 provided on the lid 35 through insulating gaskets 34 and 33. The positive and negative electrode terminals 31 and 32 are electrically connected to the electrode group by a lead (not shown).

The outer can 37 has a bottomed square cylindrical shape and is formed of a metal such as aluminum, aluminum alloy, iron, and stainless steel. An electrolytic solution (not shown) is housed in the outer can 37 and impregnated in the flat type electrode group.

The lid 35 is attached to the opening of the outer can 37 by laser seam welding, for example. The lid 35 is formed of a metal such as aluminum, aluminum alloy, iron, and stainless. It is preferable that the lid 35 and the outer can 37 are formed of the same kind of metal.

According to certain embodiments, the positive electrode may be protected from overcharge, and the capacity deterioration in cycles of the positive electrode may suppressed, whereby the non-aqueous electrolyte battery with an improved cycle life can be provided.

Returning to FIGS. 1 and 2, the positive electrode 3, the negative electrode 4, the non-aqueous electrolyte, the separator 5, and the armoring material 7 will be described in detail.

The positive electrode 3 may include a positive electrode active material, a conducting material, and a binding material. Preferably, a slurry containing those materials is coated onto at least one surface of a collector to be dried and, thus, to be pressed, whereby a positive electrode is produced and used. A metal substrate may be used as the collector.

The positive electrode active material may be any material which can perform charge and discharge by inserting and releasing lithium and other alkali metals. Preferred is at least one kind of composite oxide selected from a group of $LiNi_{1-y}M_yO_2$, $LiNi_{0.5-z}Mn_{1.5-a}M_{z+a}O_4$, $LiFe_{1-y}M_yPO_4$, and $LiMPO_4$, provided that the following conditions are satisfied: $0 \leq x < 2$; $0 \leq y < 1$; $0 \leq z < 0.5$; $0 \leq a < 1.5$; and M is a typical metal or a transition metal. Although those active materials have beneficial cycling characteristics and capacitance characteristics, deterioration is likely to be accelerated in the active materials by over discharge and overcharge and they may be easily eluted. Thus, by virtue of the use of these active materials, the effect of improving the cycle life of the above described embodiment is notably provided.

The conducting material may be any material having a suitable conductivity. Preferred is a combination of carbon black such as acetylene black or carbon such as graphite.

The binding material may be any material that is typically used in a non-aqueous electrolyte battery. Preferred is an electrochemically stable material such as polyvinylidene-fluoride and polytetrafluoroethylene.

The negative electrode 4 may include a negative electrode active material, a conducting material, and a binding material. Preferably, a slurry containing those materials is coated onto at least one surface of a collector to be dried and, thus, to be pressed, whereby a negative electrode is produced and used. A metal substrate may be used as the collector. When a high-potential negative electrode is used, aluminum is preferable as the collector in terms of cost and weight.

As the negative electrode active material, the material whose potential at which lithium ions can be inserted and released differs by 0.4 V or more (V.S. Li/Li$^+$) from the oxidation-reduction potential of Li may be used. For example, preferred is lithium titanate having a spinel structure, other lithium titanates, titanium oxide, or iron sulfide. Particularly, the lithium titanate having a spinel structure has a high charge-discharge efficiency, and since the structural change in charge and discharge cycles is small, the life is long. Thus, by virtue of the use of the lithium titanate having a spinel structure, the effect of improving the cycle life of the above described embodiment is notably provided.

The conducting material may be any material having a suitable conductivity. Preferred is a combination of carbon black such as acetylene black or carbon such as graphite.

The binding material may be any material that is typically used in a non-aqueous electrolyte battery. Preferred is an electrochemically stable material such as polyvinylidene-fluoride and polytetrafluoroethylene, carboxymethyl cellulose, styrene-butadiene rubber, and a mixture thereof.

The separator 5 may be used in order to avoid electrical contact between the positive electrode 3 and the negative electrode 4. Further, the separator 5 may be used in order to avoid the increase of resistance and capacity due to a distance between the electrodes. When the distance between the electrodes is enough, and resistance in use is within the acceptable range, the separator 5 may not be used.

The separator 5 may be formed of a material having a porous structure and capable of transmitting ions therethrough. Preferred is a material formed into a film such as polyethylene, polypropylene, and cellulose.

The separator 5 may include fine particles of metal oxide. A separator including fine particles of metal oxide is not easily deformed even if temperature exceeds a melting temperature of a polymeric material constituting the separator, and therefore, an internal short circuit is less likely to occur.

As the metal oxide, an oxide such as $Al_2O_3$, $SiO_2$, and $ZnO_2$ is preferably used. The size of the fine particles of the metal oxide is preferably not more than 10 $\mu$m. The thickness of the separator 5 is preferably 30 to 40 $\mu$m, but not limited thereto. It is preferable that the fine particles of the metal oxide are contained in an amount of 20 to 70% (w/w) of the total weight of the separator.

The separator including the fine particles of the metal oxide can be manufactured by, for example, kneading the fine particles of the metal oxide into a polymeric material constituting the separator and extruding the kneaded product.

In a battery using the separator including the fine particles of the metal oxide, when $LiPF_6$ is used alone as a lithium salt contained in a non-aqueous electrolyte, hydrofluoric acid is generated, and the metal oxide fine particles may be dissolved. Thus, when temperature exceeds the melting temperature of the polymeric material constituting the separator, the separator is easily deformed, and an internal short circuit may occur. However, in the battery of the above described embodiment, since $LiPF_6$ contained in the non-aqueous electrolyte is less than 50% of the concentration of the lithium salt, a minute amount of hydrofluoric acid is produced. Thus, in the battery of the above described embodiment, the internal short circuit does not occur.

The non-aqueous electrolyte may contain a lithium salt and a solvent or a molten salt. As the lithium salt, a supporting salt electrically conducting ions may be used. As the supporting salt, $LiPF_6$, $LiBF_4$, and imide-based supporting salt may be used. By virtue of the use of $LiPF_6$, a battery in which moving speed of ions is high, and input and output are high, can be produced. However, in a battery using a non-aqueous electrolyte containing $LiPF_6$ with high concentration, HF production rate is high, especially at high temperature, and the elution of the positive electrode is likely to be induced. Thus, according to the certain embodiments, the concentration of $LiPF_6$ may be less than 50% of the concentration of the lithium salt, whereby the generation of hydrofluoric acid is suppressed, and the elution of the positive electrode can be suppressed to a minimum. Consequently, the cycling characteristics are improved, and a battery with high output and a long life can be provided. When the concentration of $LiPF_6$ is 50% or more, the hydrofluoric acid production is increased to cause the elution of the positive electrode, and, thus, to reduce the cycling characteristics. The concentration of $LiPF_6$ is preferably 33.3% or less, more preferably 20% or less.

Further, by virtue of using a combination of $LiPF_6$ and $LiBF_4$, a battery with very high output and a long life can be produced.

$LiBF_4$ may be used alone as a lithium salt. By virtue of the fact that $LiPF_6$ is not contained as a lithium salt in a non-aqueous electrolyte, hydrofluoric acid is not generated, and the elution of the positive electrode does not occur. However, in order to suppress increases in cell swelling and self-discharge capacity, it is preferable that $LiPF_6$ is contained in a concentration of 0.01 mol/L or more.

The concentration of the lithium salt is preferably 0.5 mol/L or more and 2 mol/L or less, more preferably 1 mol/L or more and 2 mol/L or less.

A cyclic organic solvent with high permittivity may be used as the solvent, including ethylene carbonate (EC), propylene carbonate (PC), and gamma butyrolactone ($\gamma$-BL), and chain organic solvent with low viscosity, such as diethyl carbonate (DEC), ethyl methyl carbonate (EMC), and dimethyl carbonate (DMC). Propylene carbonate and diethyl carbonate have been known to have a high oxidation resistance in an electrolytic solution and allow the cycling characteristics of the positive electrode to be improved. However, propylene carbonate and diethyl carbonate are likely to be reduced in a battery using a carbon negative electrode. Further, they have been known to increase the HF production rate in an electrolytic solution to cause the positive electrode elution. Thus, when propylene carbonate or diethyl carbonate is used, according to the above described embodiment, the production of hydrofluoric acid is suppressed to suppress the elution of the positive electrode, whereby the effect of improving the cycle life is notably provided.

The armoring material 7 may include an aluminum laminate can, an aluminum can, and an iron can.

In other embodiments, there may be provided a battery pack including the above non-aqueous electrolyte battery. The battery pack has one or a plurality of the above non-aqueous electrolyte batteries (electric cells). When the battery pack includes a plurality of electric cells, the electric cells may be electrically connected in series or parallel and arranged.

The non-aqueous electrolyte battery of the above embodiment and the battery pack including the battery may be preferably used as a power supply for a digital camera, for example, and an on-vehicle battery for use in, for example, a two or four wheeled hybrid electric vehicle, a two or four wheeled electric vehicle, and an assist bicycle. Particularly, they are preferably used as the on-vehicle battery.

In still another embodiment, there are provided an automobile and bicycle using as a power source the non-aqueous electrolyte battery of the above embodiment or the battery pack including the battery.

Although some embodiments of the disclosure have been described, these embodiments are provided as examples and not intended to limit the scope of the disclosure. The embodiments can be practiced in other various forms and can be variously omitted, replaced, and changed without departing from the scope of the disclosure. Those embodiments and modifications are included in the scope of the disclosure and the abstract, and at the same time included in the disclosure described in the scope of claims and scopes equivalent thereto.

In certain embodiments, a positive electrode may be produced using $LiMn_2O_4$ as a positive electrode active material, a negative electrode may be produced using $Li_4Ti_5O_{12}$ as a negative electrode active material, and a non-aqueous electrolyte rechargeable battery may be produced. The negative electrode active material, $Li_4Ti_5O_{12}$, can insert and release lithium ions at 0.4 V or more (V.S. Li/Li$^+$), and the average of the potentials at which lithium ions can be inserted and released is 1.55 V (V.S. Li/Li$^+$).

When a positive electrode is produced, acetylene black may be used as the positive electrode active material, and a conducting material, polyvinylidene-fluoride (PVdF), may be used as a binder, and an aluminum foil may be used as a collector. $LiMn_2O_4$, acetylene black, and PVdF may be kneaded respectively with the weight ratio of 90 wt.%, 6 wt.%, and 4 wt.% to prepare a slurry for a positive electrode. The positive electrode slurry of 70 g/m$^2$ may be coated onto an aluminum foil with a thickness of 15 $\mu$m so that the coated area is 100 m$^2$, and the coated slurry may then be dried to be pressed, and, thus, to produce the positive electrode. The density of the positive electrode layer in the positive electrode may be 3.3 g/cc.

When a negative electrode is produced, graphite may be used as the negative electrode active material, a conducting material, polyvinylidene-fluoride (PVdF), may be used as a binder, and an aluminum foil may be used as a collector. $Li_4Ti_5O_{12}$, graphite, and PVdF may be kneaded respectively with the weight ratio of 90 wt.%, 6 wt.%, and 4 wt.% to prepare a slurry for a negative electrode. The negative electrode slurry of 37.5 g/m$^2$ may be coated onto an aluminum foil with a thickness of 15 $\mu$m so that the coated area is 95 m$^2$, and the coated slurry may then be dried to be pressed, and, thus, to produce the negative electrode. The density of the negative electrode layer in the negative electrode may be 2.7 g/cc.

As an electrolyte solvent, propylene carbonate (PC) and diethyl carbonate (DEC) may be used at a volume ratio of 1:1, and as a lithium salt, $LiBF_4$ of 1.4 mol/L and $LiPF_6$ of 0.1 mol/L may be used, so that a non-aqueous electrolyte is prepared.

A polyethylene separator containing $SiO_2$ particulate in an amount of 50 wt.%, a positive electrode, and a negative electrode may be superposed to be wound into a flat shape, and, thus, to produce a wound electrode group. In a wound electrode group, as shown in the plan view of FIG. 9, the negative electrode does not have the non-facing portion and the non-facing surface. The positive electrode has the non-facing portion and the non-facing surface.

The coating amount and the coated area of the slurries for positive and negative electrodes and the densities of the positive and negative electrode layers may be adjusted so that the ratio (C/A) between the area (C) of the surface including the facing portion of the positive electrode of the positive electrode layer and the area (A) of the surface including the facing portion of the negative electrode of the negative electrode layer is 1.05, and the ratio (Q2/Q1) between the capacitance (Q2) in the facing portion of the positive electrode and the capacitance (Q1) in the facing portion of the negative electrode is 1.

In certain other embodiment, positive electrode active materials, negative electrode active materials, and electrolyte solvents shown in Table 1 may be used, producing batteries in a similar manner to that described above, except that a lithium salt concentration and $LiPF_6$ content ratio may be changed as shown in Table 2. However, to make Q2/Q1 and C/A have values shown in Table 2, the coating amount, the coated area of the slurries for positive and negative electrodes, and the densities of the positive and negative electrode layers may be adjusted. The negative electrode active materials used in producing Table 1 and Table 2 can insert and release lithium ions at 0.4 V or more (V.S. Li/Li$^+$). Table 1 shows an average potential of the potentials of the active materials, at which the lithium ions can be inserted and released. The fine particles of metal oxide included in a separator are shown in Table 1.

One cycle means that in constant-voltage charging after constant-current charging in which a full charge is 2.9 V, charge is performed at 1C current until 1C current is converged to 0.05C current, and thereafter 1C constant current discharge is performed to 1.5 V. With regard to the battery of each example, the capacity after 10000 cycles is measured at an environmental temperature of 50°C, and the capacity maintenance ratio after 10000 cycles is calculated. The result is shown in Table 3.

With regard to the embodiments 1-30 described in the tables, in which the concentration of $LiPF_6$ contained in the non-aqueous electrolyte is less than 50%, Q2/Q1 is 1 or more, C/A is 1 and 2 or less, and the negative electrode active material which can be charged and discharged at 0.4 V or more (V.S. Li/Li$^+$) is used, when embodiments 1 to 30 are compared with the comparative examples 1 to 5 and 8 to 10 in the tables, it is found that the capacity maintenance ratio after 10000 cycles is high, the cycle life is long, and the cycle life is long even under the high temperature environment of 50°C.

[Table 1-1]

| | Cathode Active Material | Anode Active Material | Average Potential (vs Li) | Metal Oxide | Electrolyte Solvent |
|---|---|---|---|---|---|
| Emb. 1 | $LiMn_2O_4$ | $Li_4Ti_5O_{12}$ | 1.55 V | $SiO_2$ | PC:DEC=1:1vol. |
| Emb. 2 | $LiMn_2O_4$ | $Li_4Ti_5O_{12}$ | 1.55 V | $SiO_2$ | PC:DEC=1:1vol. |
| Emb. 3 | $LiMn_2O_4$ | $Li_4Ti_5O_{12}$ | 1.55 V | $SiO_2$ | PC:DEC=1:1vol. |
| Emb. 4 | $LiMn_2O_4$ | $Li_4Ti_5O_{12}$ | 1.55 V | $SiO_2$ | PC:DEC=1:1vol. |
| Emb. 5 | $LiMn_2O_4$ | $Li_4Ti_5O_{12}$ | 1.55 V | $SiO_2$ | PC:DEC=1:1vol. |
| Emb. 6 | $LiMn_2O_4$ | $Li_4Ti_5O_{12}$ | 1.55 V | $SiO_2$ | PC:DEC=1:1vol. |
| Emb. 7 | $LiMn_2O_4$ | $Li_4Ti_5O_{12}$ | 1.55 V | $SiO_2$ | PC:DEC=1:1vol. |
| Emb. 8 | $LiMn_2O_4$ | $Li_4Ti_5O_{12}$ | 1.55 V | $SiO_2$ | PC:DEC=1:1vol. |
| Emb. 9 | $LiMn_2O_4$ | $Li_4Ti_5O_{12}$ | 1.55 V | $SiO_2$ | PC:DEC=1:1vol. |
| Emb. 10 | $LiMn_2O_4$ | $Li_4Ti_5O_{12}$ | 1.55 V | $SiO_2$ | PC:DEC=1:1vol. |
| Emb. 11 | $LiMn_2O_4$ | $Li_4Ti_5O_{12}$ | 1.55 V | $SiO_2$ | PC:DEC=1:1vol. |
| Emb. 12 | $LiMn_2O_4$ | $Li_4Ti_5O_{12}$ | 1.55 V | $SiO_2$ | PC:DEC=1:1vol. |
| Emb. 13 | $LiMn_2O_4$ | $Li_4Ti_5O_{12}$ | 1.55 V | $SiO_2$ | PC:DEC=1:1vol. |
| Emb. 14 | $LiMn_2O_4$ | $Li_4Ti_5O_{12}$ | 1.55 V | $SiO_2$ | PC:DEC=1:1vol. |
| Emb. 15 | $LiMn_2O_4$ | $Li_4Ti_5O_{12}$ | 1.55 V | $SiO_2$ | PC:DEC=1:1vol. |
| Emb. 16 | $LiMn_2O_4$ | $Li_4Ti_5O_{12}$ | 1.55 V | $SiO_2$ | PC:DEC=1:1vol. |
| Emb. 17 | $LiMn_2O_4$ | $Li_4Ti_5O_{12}$ | 1.55 V | $SiO_2$ | PC:DEC=1:1vol. |
| Emb. 18 | $LiMn_2O_4$ | $Li_4Ti_5O_{12}$ | 1.55 V | $Al_2O_3$ | PC:DEC=1:1vol. |
| Emb. 19 | $LiMn_2O_4$ | $Li_4Ti_5O_{12}$ | 1.55 V | $ZnO_2$ | PC:DEC=1:1vol. |
| Emb. 20 | $LiMn_2O_4$ | $Li_4Ti_5O_{12}$ | 1.55 V | $SiO_2$ | PC:MEC=1 1vol. |
| Emb. 21 | $LiMn_2O_4$ | $Li_4Ti_5O_{12}$ | 1.55 V | $SiO_2$ | EC:DEC=1:1vol |

[Table 1-2]

| | Cathode Active Material | Anode Active Material | Average Potential (vs Li) | Metal Oxide | Electrolyte Solvent |
|---|---|---|---|---|---|
| Emb. 22 | $LiMn_2O_4$ | $Li_4Ti_5O_{12}$ | 1.55 V | $SiO_2$ | EC:MEC=1:1vol |
| Emb. 23 | $LiMn_2O_4$ | $Li_4Ti_5O_{12}$ | 1.55 V | $SiO_2$ | PC:DEC=1:1vol. |
| Emb. 24 | $LiMn_2O_4$ | $Li_4Ti_5O_{12}$ | 1.55 V | $SiO_2$ | PC:DEC=1:1vol. |

(continued)

|  | Cathode Active Material | Anode Active Material | Average Potential (vs Li) | Metal Oxide | Electrolyte Solvent |
|---|---|---|---|---|---|
| Emb. 25 | $LiMn_2O_4$ | $Li_4Ti_5O_{12}$ | 1.55 V | $SiO_2$ | PC:DEC=1:1vol. |
| Emb. 26 | $LiMn_2O_4$ | $Li_4Ti_5O_{12}$ | 1.55 V | $SiO_2$ | PC:DEC=1:1vol. |
| Emb. 27 | $LiNi_{0.33}Co_{0.33}Mn_{0.34}O_2$ | $Li_4Ti_5O_{12}$ | 1.55 V | $SiO_2$ | PC:DEC=1:1vol. |
| Emb. 28 | $LiNi_{0.33}Co_{0.33}Mn_{0.34}O_2$ | $TiO_2$ | 1.8V | $SiO_2$ | PC:DEC=1:1vol. |
| Emb. 29 | $LiFePO_4$ | $Li_4Ti_5O_{12}$ | 1.55 V | $SiO_2$ | PC:DEC=1:1vol. |
| Emb. 30 | $LiCoO_2$ | $Li_4Ti_5O_{12}$ | 1.55 V | $SiO_2$ | PC:DEC=1:1vol. |
| Comparative Examples 1 | $LiMn_2O_4$ | $Li_4Ti_5O_{12}$ | 1.55 V | $SiO_2$ | PC:DEC=1:1vol. |
| Comparative Examples 2 | $LiMn_2O_4$ | $Li_4Ti_5O_{12}$ | 1.55 V | $SiO_2$ | PC:DEC=1:1vol. |
| Comparative Examples 3 | $LiMn_2O_4$ | $Li_4Ti_5O_{12}$ | 1.55 V | $SiO_2$ | PC:DEC=1:1vol. |
| Comparative Examples 4 | $LiMn_2O_4$ | $Li_4Ti_5O_{12}$ | 1.55 V | $SiO_2$ | PC:DEC=1:1vol. |
| Comparative Examples 5 | $LiMn_2O_4$ | $Li_4Ti_5O_{12}$ | 1.55 V | $SiO_2$ | PC:DEC=1:1vol. |
| Comparative Examples 6 | $LiMn_2O_4$ | $Li_4Ti_5O_{12}$ | 1.55 V | $SiO_2$ | PC:DEC=1:1vol. |
| Comparative Examples 7 | $LiMn_2O_4$ | $Li_4Ti_5O_{12}$ | 1.55 V | $SiO_2$ | PC:DEC=1:1vol. |
| Comparative Examples 8 | $LiMn_2O_4$ | $Li_4Ti_5O_{12}$ | 1.55 V | $SiO_2$ | PC:DEC=1:1vol. |
| Comparative Examples 9 | $LiMn_2O_4$ | $Li_4Ti_5O_{12}$ | 1.55 V | $SiO_2$ | PC:DEC=1:1vol. |
| Comparative Examples 10 | $LiNi_{0.33}Co_{0.33}Mn_{0.34}O_2$ | Graphite | 0.20V | $SiO_2$ | PC:DEC=1:1vol. |

[Table 2-1]

|  | Q2/Q1 | C/A | Electrolyte concentration | | Total electrolyte concentration | LiPF$_6$ Content ratio |
|---|---|---|---|---|---|---|
| Emb. 1 | 1 | 1.05 | $LiBF_4$ $LiPF_6$ | 1.4mol/L 0.1mol/L | 1.5 mol/L | 6.7% |
| Emb. 2 | 1 | 1.05 | $LiBF_4$ $LiPF_6$ | 1.5mol/L 0mol/L | 1.5 mol/L | 0.0% |
| Emb. 3 | 1 | 1.05 | $LiBF_4$ $LiPF_6$ | 1.49mol/L 0.01mol/L | 1.5 mol/L | 0.7% |
| Emb. 4 | 1 | 1.05 | $LiBF_4$ $LiPF_6$ | 1mol/L 0.5mol/L | 1.5 mol/L | 33.3% |
| Emb. 5 | 1 | 1.05 | $LiBF_4$ $LiPF_6$ | 0.8mol/L 0.7mol/L | 1.5 mol/L | 46.7% |

(continued)

| | Q2/Q1 | C/A | Electrolyte concentration | | Total electrolyte concentration | LiPF$_6$ Content ratio |
|---|---|---|---|---|---|---|
| Emb. 6 | 1 | 1.05 | LiBF$_4$<br>LiPF$_6$ | 1.9mol/L<br>0.1mol/L | 2.0 mol/L | 5.0% |
| Emb. 7 | 1 | 1.05 | LiBF$_4$<br>LiPF$_6$ | 2mol/L<br>0mol/L | 2.0 mol/L | 0.0% |
| Emb. 8 | 1 | 1.05 | LiBF$_4$<br>LiPF$_6$ | 1.5mol/L<br>0.5mol/L | 2.0 mol/L | 25.0% |
| Emb. 9 | 1 | 1.05 | LiBF$_4$<br>LiPF$_6$ | 1.1mol/L<br>0.9mol/L | 2.0 mol/L | 45.0% |
| Emb. 10 | 1 | 1.05 | LiBF$_4$<br>LiPF$_6$ | 0.9mol/L<br>0.1 mol/L | 1.0 mot/L | 10.0% |
| Emb. 11 | 1 | 1.05 | LiBF$_4$<br>LiPF$_6$ | 0.5mol/L<br>0mol/L | 0.5 mol/L | 0.0% |
| Emb. 12 | 1 | 1.05 | LiBF$_4$<br>LiPF$_6$ | 0.49mol/L<br>0.01mol/L | 0.5 mol/L | 2.0% |
| Emb. 13 | 1 | 1.05 | LiBF$_4$<br>LiPF$_6$ | 0.3mol/L<br>0.2mol/L | 0.5 mol/L | 40.0% |
| Emb. 14 | 1 | 1.05 | LiBF$_4$<br>LiPF$_6$ | 0.2mol/L<br>0.1mol/L | 03 mol/L | 33.3% |
| Emb. 15 | 1 | 1.05 | LiBF$_4$<br>LiPF$_6$ | 0.15mol/L<br>0.1mol/L | 0.25 mol/L | 40.0% |
| Emb. 16 | 1 | 1.05 | LiBF$_4$<br>LiPF$_6$ | 1.7mol/L<br>0.5mol/L | 2.2 mol/L | 22.7% |
| Emb. 17 | 1 | 1.05 | LiBF$_4$<br>LiPF$_6$ | 2mol/L<br>0.5mol/L | 2.5 mol/L | 20.0% |
| Emb. 18 | 1 | 1.05 | LiBF$_4$<br>LiPF$_6$ | 1.4mol/L<br>0.1mol/L | 1.5 mol/L | 6.7% |
| Emb. 19 | 1 | 1.05 | LiBF$_4$<br>LiPF$_6$ | 1.4mol/L<br>0.1mol/L | 1.5 mol/L | 6.7% |
| Emb. 20 | 1 | 1.05 | LiBF$_4$<br>LiPF$_6$ | 1.4mol/L<br>0.1mol/L | 1.5 mol/L | 6.7% |
| Emb. 21 | 1 | 1.05 | LiBF$_4$<br>LiPF$_6$ | 1.4mol/L<br>0.1mol/L | 1.5 mol/L | 6.7% |

[Table 2-2]

| Emb. 22 | 1 | 1.05 | LiBF$_4$<br>LiPF$_6$ | 1.4mol/L<br>0.1mol/L | 1.5 mol/L | 6.7% |
|---|---|---|---|---|---|---|
| Emb. 23 | 1 | 1 | LiBF$_4$<br>LiPF$_6$ | 1.4mol/L<br>0.1mol/L | 1.5 mol/L | 6.7% |
| Emb. 24 | 1 | 1.5 | LiBF$_4$<br>LiPF$_6$ | 1.4mol/L<br>0.1mol/L | 1.5 mol/L | 6.7% |

(continued)

| Emb. 25 | 1 | 2 | $LiBF_4$ $LiPF_6$ | 1.4mol/L 0.1mol/L | 1.5 mol/L | 6.7% |
|---|---|---|---|---|---|---|
| Emb. 26 | 1.1 | 1.05 | $LiBF_4$ $LiPF_6$ | 1.4mol/L 0.1mol/L | 1.5 mol/L | 6.7% |
| Emb. 27 | 1 | 1.1 | $LiBF_4$ $LiPF_6$ | 1.4mol/L 0.1mol/L | 1.5 mol/L | 6.7% |
| Emb. 28 | 1 | 1.1 | $LiBF_4$ $LiPF_6$ | 1.4mol/L 0.1mol/L | 1.5 mol/L | 6.7% |
| Emb. 29 | 1 | 1.1 | $LiBF_4$ $LiPF_6$ | 1.4mol/L 0.1mol/L | 1.5 mol/L | 6.7% |
| Emb. 30 | 1 | 1.1 | $LiBF_4$ $LiPF_6$ | 1.4mol/L 0.1mol/L | 1.5 mol/L | 6.7% |

[Table 2-3]

| | Q2/Q1 | C/A | Electrolyte concentration | | Total electrolyte concentration | $LiPF_6$ Content ratio |
|---|---|---|---|---|---|---|
| Comparative Examples 1 | 1 | 1.05 | $LiBF_4$ $LiPF_6$ | 0.75mol/L 0.75mol/L | 1.5 mol/L | 50.0% |
| Comparative Examples 2 | 1 | 1.05 | $LiBF_4$ $LiPF_6$ | 1mol/L 1mol/L | 2.0 mol/L | 50.0% |
| Comparative Examples 3 | 1 | 1.05 | $LiBF_4$ $LiPF_6$ | 0.25mol/L 0.25mol/L | 0.5 mol/L | 50.0% |
| Comparative Examples 4 | 1 | 1.05 | $LiBF_4$ $LiPF_6$ | 0.5mol/L 0.1mol/L | 1.5 mol/L | 66.7% |
| Comparative Examples 5 | 1 | 1.05 | $LiBF_4$ $LiPF_6$ | 0mol/L 1.5mol/L | 1.5 mol/L | 100.0% |
| Comparative Examples 6 | 1 | 0.9 | $LiBF_4$ $LiPF_6$ | 1.4mol/L 0.1mol/L | 1.5 mol/L | 6.7% |
| Comparative Examples 7 | 1 | 2.5 | $LiBF_4$ $LiPF_6$ | 1.4mol/L 0.1mol/L | 1.5 mol/L | 6.7% |
| Comparative Examples 8 | 0.9 | 1.05 | $LiBF_4$ $LiPF_6$ | 1.4mol/L 0.1mol/L | 1.5 mol/L | 6.7% |
| Comparative Examples 9 | 0.8 | 1.05 | $LiBF_4$ $LiPF_6$ | 1.4mol/L 0.1mol/L | 1.5 mol/L | 6.7% |
| Comparative Examples 10 | 1 | 1.1 | $LiBF_4$ $LiPF_6$ | 1.4mol/L 0.1mol/L | 1.5 mol/L | 6.7% |

[Table 3-1]

| | Capacity Maintenance Ratio after 10000 cycles |
|---|---|
| Embodiments 1 | 99% |
| Embodiments 2 | 90% |
| Embodiments 3 | 98% |

(continued)

| | Capacity Maintenance Ratio after 10000 cycles |
|---|---|
| Embodiments 4 | 88% |
| Embodiments 5 | 81% |
| Embodiments 6 | 99% |
| Embodiments 7 | 91% |
| Embodiments 8 | 88% |
| Embodiments 9 | 82% |
| Embodiments 10 | 95% |
| Embodiments 11 | 89% |
| Embodiments 12 | 94% |
| Embodiments 13 | 83% |
| Embodiments 14 | 86% |
| Embodiments 15 | 89% |
| Embodiments 16 | 86% |
| Embodiments 17 | 88% |
| Embodiments 18 | 99% |
| Embodiments 19 | 99% |
| Embodiments 20 | 87% |
| Embodiments 21 | 88% |
| Embodiments 22 | 84% |
| Embodiments 23 | 99% |
| Embodiments 24 | 99% |
| Embodiments 25 | 99% |

[Table 3-2]

| | Capacity Maintenance Ratio after 10000 cycles |
|---|---|
| Embodiments 26 | 99% |
| Embodiments 27 | 98% |
| Embodiments 28 | 94% |
| Embodiments 29 | 99% |
| Embodiments 30 | 98% |
| Comparative Examples 1 | 62% |
| Comparative Examples 2 | 64% |
| Comparative Examples 3 | 58% |
| Comparative Examples 4 | 53% |
| Comparative Examples 5 | 40% |
| Comparative Examples 6 | 83% |
| Comparative Examples 7 | 99% |

(continued)

| | Capacity Maintenance Ratio after 10000 cycles |
|---|---|
| Comparative Examples 8 | 72% |
| Comparative Examples 9 | 65% |
| Comparative Examples 10 | 44% |

When C/A is less than 1 or more than 2, although the energy density is reduced, the effects of the cycle life are relatively small. Thus, although C/A is less than 1 in the comparative example 6 and more than 2 in the comparative example 7, the capacity maintenance ratio after 10000 cycles is high. However, C/A in the comparative example 6 is 0.9, C/A in the comparative example 9 is 2.5, and the battery weights are increased respectively by about 1% and about 3%, compared with Embodiment 1. Thus, the energy density is reduced with the increase of the weight.

While certain embodiments of a non-aqueous electrolyte battery have been described, these embodiments have been presented by way of example only, and are not intended to limit the scope of the disclosure. Indeed, the novel systems described herein may be embodied in a variety of other forms; furthermore, various omissions, substitutions and changes in the form of the systems described herein may be made without departing from the spirit of the disclosure. The accompanying claims and their equivalent are intended to cover such forms or modifications as would fall within the scope and spirit of the disclosure.

**Claims**

1. A non-aqueous electrolyte battery comprising:

   a positive electrode including a positive electrode layer formed on at least one surface of a positive electrode collector;
   a negative electrode including a negative electrode layer formed on at least one surface of a negative electrode collector;
   a separator disposed between the positive electrode and the negative electrode; and
   a non-aqueous electrolyte containing a lithium salt,
   wherein:

   the negative electrode layer contains a negative electrode active material which can insert and release lithium ions at 0.4 V or more (V.S. $Li/Li^+$), and
   the following formulae (I) is satisfied:

   $$1 \leq Q2/Q1 \quad (I)$$

   wherein:

   a portion facing the positive electrode through the separator of the negative electrode layer is a facing portion of the negative electrode,
   a portion facing the negative electrode through the separator of the positive electrode layer is a facing portion of the positive electrode,
   Q1 represents a capacitance in the facing portion of the negative electrode,
   Q2 represents a capacitance in the facing portion of the positive electrode.

2. The non-aqueous electrolyte battery according to claim 1, wherein the lithium salt contains $LiBF_4$.

3. The non-aqueous electrolyte battery according to claim 1 or claim 2, wherein the lithium salt contains $LiPF_6$ with a concentration of 33.3% or less.

4. The non-aqueous electrolyte battery according to claim 3, wherein the lithium salt contains $LiPF_6$ with a concentration of 20% or less.

5. The non-aqueous electrolyte battery according to any one of claims 1-4, wherein the lithium salt is contained in the non-aqueous electrolyte in a concentration of 0.5 mol/L or more and 2 mol/L or less.

6. The non-aqueous electrolyte battery according to any one of claims 1-5, wherein the negative electrode material contains lithium titanate having a spinel structure.

7. The non-aqueous electrolyte battery according to any one of claims 1-6, wherein the separator includes fine particles of metal oxide.

8. A method for manufacturing a non-aqueous electrolyte battery, comprising:

> providing a positive electrode including a positive electrode layer formed on at least one surface of a positive electrode collector;
> providing a negative electrode including a negative electrode layer formed on at least one surface of a negative electrode collector;
> providing a separator disposed between the positive electrode and the negative electrode; and
> providing a non-aqueous electrolyte containing a lithium salt,
> wherein:
>
> the negative electrode layer contains a negative electrode active material which can insert and release lithium ions at 0.4 V or more (V.S. Li/Li$^+$), and
> the following formula (I) is satisfied:

$$1 \leq Q2/Q1 \quad (I)$$

$$1 \leq C/A \leq 2 \quad (II),$$

> wherein:
>
> a portion facing the positive electrode through the separator of the negative electrode layer is a facing portion of the negative electrode,
> a portion facing the negative electrode through the separator of the positive electrode layer is a facing portion of the positive electrode,
> Q1 represents a capacitance in the facing portion of the negative electrode,
> Q2 represents a capacitance in the facing portion of the positive electrode.

9. The method of claim 8, wherein the lithium salt contains LiBF$_4$.

10. The method of claim 8 or claim 9, wherein the lithium salt contains LiPF$_6$ with a concentration of 33.3% or less.

11. The method of claim 10, wherein the lithium salt contains LiPF$_6$ with a concentration of 20% or less.

12. The method of any one of claims 8-11, wherein the lithium salt is contained in the non-aqueous electrolyte in a concentration of 0.5 mol/L or more and 2 mol/L or less.

13. The method any one of claims 8-12, wherein the negative electrode material contains lithium titanate having a spinel structure.

14. The method of any one of claims 8-13, wherein the separator includes fine particles of metal oxide.

15. A method for powering electrical equipment, comprising:

> electrically connecting a non-aqueous electrolyte battery as specified in any one of claims 1-7 to an electric vehicle.

16. The method of claim 15, wherein the electric vehicle comprises one of the following: an electric bicycle, an electric motorcycle, and an electric automobile.

*FIG. 1*

# FIG. 2

# FIG. 3

FIG. 4

FIG. 5

FIG. 6

FIG. 7

Non-facing
**56** portion    Inner              Outer   **58** Outermost
          periphery             periphery )   layer

Positive
**53b** electrode
layer

**55** Separator

Positive
**53b'** electrode
layer

**59** Innermost layer                  Non-facing
                                         **57** portion

*FIG. 8*

# FIG. 9

53b
53a
53b'
54b
54a
54b
57
55
55

Non-facing Portion

Non-facing Portion

56 59

Innermost Layer

58

FIG. 10

EP 3 002 815 A1

EP 3 002 815 A1

**73a** Metal substrate

**73** Positive electrode

**73b** Cathode active material

**75** Separator

**74b** Anode active material

**74** Negative electrode

**74a** Metal substrate

*FIG. 11*

# FIG. 12

**76** Facing

73a

73b

**77** Non-facing

75

74b

74a

# FIG. 13

# FIG. 14

# FIG. 15

88 Conducting portion

83 Cathode

85 Separator

84 Anode

88

# FIG. 16

# FIG. 17

Europäisches
Patentamt

European
Patent Office

Office européen
des brevets

# EUROPEAN SEARCH REPORT

**Application Number**

EP 15 19 2072

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/231705 A1 (OHZUKU TSUTOMU [JP] ET AL) 4 October 2007 (2007-10-04) * paragraphs [0104], [0107] - [0109], [0114]; figures 1,2 * | 1,2,5,6 | INV. H01M10/052 H01M4/58 |
| X | EP 1 189 299 A2 (SONY CORP [JP]) 20 March 2002 (2002-03-20) | 1,2,5-9, 12-14 | |
| Y | * paragraphs [0021], [0042], [0046], [0055], [0057]; claims 1, 2; table 1 * | 1-16 | |
| X | JP 6 275321 A (TOSHIBA CORP) 30 September 1994 (1994-09-30) | 1-5, 8-12,15, 16 | |
| Y | * paragraphs [0004], [0012], [0051], [0061] - [0067] * | 1-16 | |
| Y | JP 2007 134047 A (MITSUBISHI CHEM CORP) 31 May 2007 (2007-05-31) * abstract * | 1-16 | |
| Y | JP 2000 058118 A (TOYOTA CENTRAL RES & DEV) 25 February 2000 (2000-02-25) * abstract * | 1-16 | **TECHNICAL FIELDS SEARCHED (IPC)** H01M |
| Y | US 5 322 746 A (WAINWRIGHT DAVID [CA]) 21 June 1994 (1994-06-21) * column 2, lines 4-16; figures 1-3 * | 1-16 | |

The present search report has been drawn up for all claims

| Place of search | Date of completion of the search | Examiner |
|---|---|---|
| Munich | 11 February 2016 | Möller, Claudia |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 19 2072

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2016

| Patent document cited in search report | | Publication date | Patent family member(s) | | Publication date |
|---|---|---|---|---|---|
| US 2007231705 | A1 | 04-10-2007 | CN | 101022177 A | 22-08-2007 |
| | | | JP | 4963186 B2 | 27-06-2012 |
| | | | JP | 2007273405 A | 18-10-2007 |
| | | | US | 2007231705 A1 | 04-10-2007 |
| EP 1189299 | A2 | 20-03-2002 | CN | 1363965 A | 14-08-2002 |
| | | | EP | 1189299 A2 | 20-03-2002 |
| | | | JP | 2002093464 A | 29-03-2002 |
| | | | KR | 20020022015 A | 23-03-2002 |
| | | | TW | 518780 B | 21-01-2003 |
| | | | US | 2002076605 A1 | 20-06-2002 |
| JP 6275321 | A | 30-09-1994 | | | |
| JP 2007134047 | A | 31-05-2007 | NONE | | |
| JP 2000058118 | A | 25-02-2000 | NONE | | |
| US 5322746 | A | 21-06-1994 | CA | 2099757 A1 | 03-04-1994 |
| | | | US | 5322746 A | 21-06-1994 |

EPO FORM P0459

For more details about this annex : see Official Journal of the European Patent Office, No. 12/82